# EUROPEAN PATENT SPECIFICATION

(11) **EP 0 840 807 B1**
(45) Date of publication and mention of the grant of the patent: **13.11.2002**
(21) Application number: 96900802.8
(22) Date of filing: 25.01.1996
(51) Int. Cl.: C21B 13/08, C21B 13/14

(54) **DIRECT IRON AND STEELMAKING**
VERFAHREN ZUR DIREKTEN GEWINNING VON EISEN UND STAHL
FABRICATION DIRECTE DE FER ET D'ACIER

(43) Date of publication of application: 13.05.1998
(73) Proprietor: Sherwood, William Lyon, Vancouver British Columbia V6P 5M2 (CA)
(72) Inventor: Sherwood, William Lyon, Vancouver British Columbia V6P 5M2 (CA)
(74) Representative: Sunderland, James Harry
(86) International application number: CA9600055
(87) International publication number: WO97027338

(56) References cited:
- EP-A- 0 209 861
- EP-A- 0 657 550
- FR-A- 1 504 346
- GB-A- 1 213 641
- US-A- 2 356 524

## Description

The invention relates to the manufacture of iron and steel and, more particularly, is drawn to an integrated process for direct iron and steelmaking.

The major portion of integrated steel plants continue to employ the blast furnace process combining iron oxide reduction with fusion of the iron to yield a carbon-saturated liquid, followed by batch-wise transfer of the liquid iron to the basic oxygen process in one of its various forms, where the carbon is oxidized in a separate steelmaking step. A minor portion now employ a solid-state direct reduction process producing direct-reduced iron without fusion, across a range of carbon contents, which is subsequently transported to another process and melted, most commonly by the electric-arc furnace process, for the steelmaking step.

A majority of the solid-state reduction processes currently operating feature a descending, moving bed of iron oxide materials within a vertical shaft or retort vessel, through which hot reducing gases rise countercurrently, and which are partially oxidized as they reduce the oxides to metallic iron. A minority utilize a fluidized bed of iron oxide materials, in which relative gas-to-particle movement is more random. The off-gases contain unreacted reducing gases and a substantial portion are therefore re-enriched with hydrocarbons or hydrocarbon reaction products and recycled, after removing H₂O or CO₂, or both. The balance are usually combusted to generate heating gases to balance the product, chemical reaction and thermal loss energy requirements of the overall process.

The reducing gases, principally H₂ and CO, are generated from a range of hydrocarbon sources including natural gas, synthetic gases, coal and fuel oil. They are reformed catalytically or by partial combustion in-process or in gas generators, or various combinations, by reaction of hydrocarbons with recycle gas, steam or other oxidants. Reforming is accomplished outside the top gas recycling loop, catalytically within the loop either in an external reformer or within the furnace, or in combustion chambers in the loop but external to the furnace. All of these combinations are currently known in the art of direct reduction.

It is a major object of the present invention to integrate solid state reduction with iron melting and steelmaking in a combination utilizing hydrocarbon fuels as the combined energy source with interconnecting utilization of exhaust gas heat content between reduction and melting stages, including elimination of in-process charge cooling heat losses between process stages.

Another object is to produce molten iron or steel directly from iron ore, iron ore pellets, or the like, whilst providing for concurrent steady-state operation of the sequential process stages, and avoiding intermediate discharge, accumulation, transfer, storage, etc. of in-process materials between process stages.

Another object is to provide flexible composition control across various grades of cast iron and steel product specification requirements.

Still another object is to provide for direct utilization of a range of hydrocarbons such as natural gas, producer gas, petroleum oil and coal, as fuels for iron and steelmaking, without intermediate thermal generation of electric power.

A further object is to reduce overall energy consumption by making use of waste energy from each process stage for other stages, attaining complete reaction of hydrocarbon fuels to H₂O and CO₂ as nearly the only gaseous reaction products, and minimizing the quantity and temperature of product gases exhausted to atmosphere.

A still further object is to minimize the quantity of particulates and gaseous pollutants discharged into the environment.

Other objects include simple process equipment, high yields, low capital costs, low operating and maintenance costs, and flexibility as to size of operation.

Although various forms of hydrocarbon-fuel-fired melting furnaces are known, rotary furnaces incorporate some particularly advantageous features for the continuous melting of hot reduced iron. These include much higher heating rates than a stationary furnace, as results from flame-to-wall followed by wall-to-charge heat transfer during each rotation, elongated reaction zones, facility of complete combustion of the heating fueled by oxidant within the furnace and continuous wall movement assuring agitation, advancement and lack of pileup of the charge during melting. Accordingly, a major aspect of the invention is a process for direct iron and steelmaking comprising the following steps:
a) maintaining a gas-solid reaction zone within a reduction reactor adapted for heating and reduction of a charge of iron oxide materials to obtain metallic iron, by contact with hot process gases continaining H₂ and CO;
b) maintaning a gas-solid-liquid reaction zone within a rotary furnace adapted for melting within a partially fused bath by heat transferred from the rotating furnace walls in contact with said bath during furnace rotation;
c) feeding iron oxide materials into said reduction reactor;
d) transferring said solid metallic iron from said gas-solid reaction zone into said gas-solid-liquid reaction zone substantially without cooling or exposure to the outside atmosphere of said iron;
e) supplying heat by introducing fuel and oxidant for combustion to form hot gaseous combustion products comprising CO₂ and H₂O within said rotary furnace from which heat is transferred to said walls and said bath, thereby melting said solid metallic iron to form liquid metallic iron in said gas-solid-liquid reaction zone;
f) exhausting top gas containing H₂O and CO₂ as well as unreacted H₂ and CO from said gas-solid reaction zone;
g) removing a major portion of the H₂O contained in said top gas;
h) mixing a major portion of said dewatered top gas together with reducing gases to form an enriched gas mixture;
i) exhausting said gaseous combustion products of said fuel and oxidant in step (e) from said rotary furnace and transferring sensible heat contained therein to comprise sensible heat of said enriched gas mixture from step (h);
j) supplying additional heat to said enriched gas mixture sufficient to sustain said heating and reduction of iron oxide materials to yield hot solid metallic iron;
k) recycling said enriched gas mixture into said reduction reactor; and
1) discharging of said liquid metallic iron and slag from said gas-solid-liquid reaction zone."

Reforming of hydrocarbons by catalysis by contact with hot reduced metallic iron within the gas-solid reaction zone can act in place of separate reformer equipment, in embodiments wherein the reducing gases in step (9) comprise hydrocarbons and step (j) includes recycling the enriched gas mixture into the reduction reactor at a location to contact reduced metallic iron, where the hydrocarbons react to form H₂ and CO to comprise the hot process gases which react with the iron oxide materials to yield solid metallic iron. In view of the large heat requirements of endothermic chemical reaction in the gas-solid reaction zone, in the preferred embodiments step (i) comprises combusting a minor portion of the dewatered top gas with oxidant to produce hot gaseous combustion product and transferring sensible heat contained therein to comprise sensible heat of the enriched gas mixture from step (g).

Introducing hydrocarbon fuels/reductants primarily only into the gas-solid reaction zone gas recycling circuit and employing a minor portion of the dewatered top gas as the principal fuel for combustion within the rotary furnace in step (e) enhances the reducing power of the gas-solid reaction zone gases and thus reaction intensity is enhanced, whilst preserving the ability to maintain adequate melting heat intensity in the gas-solid-liquid reaction zone. Gaseous oxygen or oxygen-enriched air is preferably utilized as the oxidant for melting, although preheated air could be used if oxygen is unavailable.

The enriched gas mixture from step (g) is preferably heated to a temperature in the range of 850-1150°C by step (h) and (i) for recycling in step (j), most usually about 1050°C. Most commonly, the process of the invention includes the steps of introducing additional materials, such as scrap iron and steel, fluxing materials, alloying materials and carbon as additives directly into the rotary furnace for melting and reaction along with the metallic iron transferred from the reactor in step (d) and providing a gas-liquid reaction zone within the rotary furnace into which the discharging of liquid metallic iron in step (k) takes place as welll as slag formed by fusion of gangue and residual oxides of the iron oxide materials, fluxes and impurities present; adjusting the temperature and composition of the liquid iron by controlled combustion of fuel and oxidant within the gas-liquid reaction zone to yield liquid iron and steel of controlled temperature and composition. This may be siphoned from the rotary furnace into a vacuum withdrawal vessel for alloying and other processing in preparation for casting, with the bulk of the slag discharged separately. It is preferred that the various process steps are conducted concurrently and continuously. Also, recovery of sensible heat for recycling can be minimized, such as by a step of extracting sensible heat contained in the top gas in step (f) prior to removing of water vapor, for in-process recovery and recycling as part of the sensible heat contained in said enriched gas mixture in step (j).

The invention also encompasses embodiments wherein the hot process gases in step (a) are at lower temperatures, such as when the enriched gas mixture in step (g) is heated to only 500-850°C by steps (h) and (j), causing deposition of carbon and formation of iron carbide, Fe₃C, compound. Alternatively, these can be formed by additional hydrocarbon introduced for reaction and partial cooling of the metallic iron just prior to step (d).

Various other objects, features and advantages of the process of this invention will become apparent from the following detailed description and claims, and by referring to the accompanying drawings, in which:
Fig. 1 is a flowsheet diagram illustrating basic features of the process of this invention; and
Fig 2 is a graph of equilibrium values of the iron-oxygen-hydrogen-carbon system at one atmosphere pressure, illustrating reaction relationships influencing reduction-reactor solid and gaseous in-process compositions.

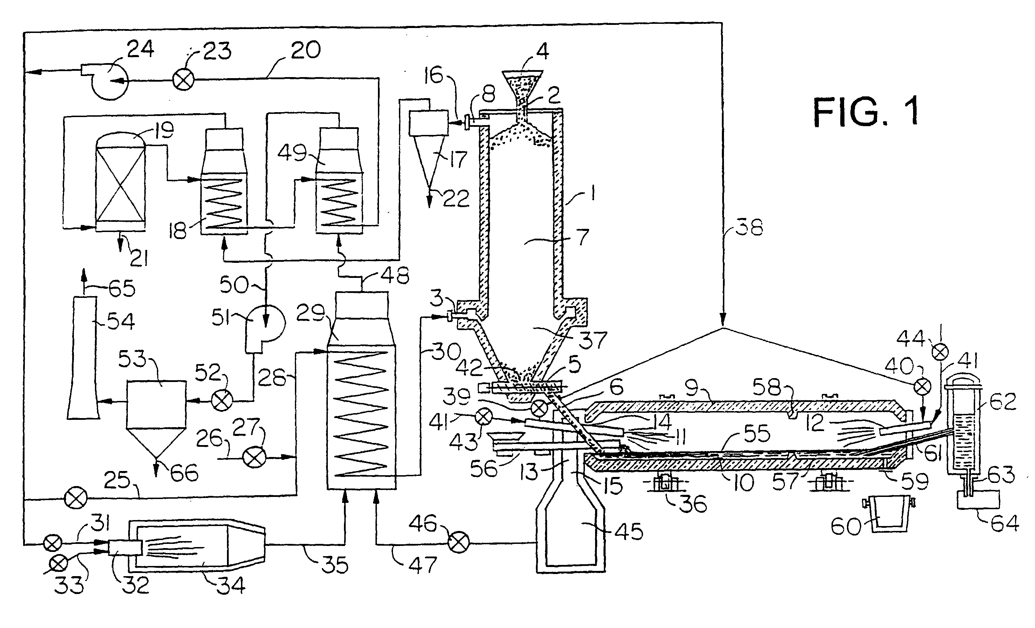

Referring to the flowsheet Fig. 1, which is generally illustrative of process material and gas flow during steady-state continuous operating conditions, reduction reactor 1 includes a feed inlet 2 for solid iron oxide materials 4 commonly in the form of pellets or lumps, a gas inlet 3 for process gases and a solids outlet 42. A variety of alternative charging systems and internal configurations of reduction reactors are known in the art of direct reduction of iron with gaseous reductants. The gases introduced at inlet 3 percolate through the gas-solid reaction zone 7 countercurrent to the general movement of solid charge and exit via reacted gas outlet 8.

The hot reduced iron is discharged by means of screw conveyor 5, or a rotary discharge valve or the like, into transfer conduit 6 adapted for transferring the hot iron and charging it into gas-solid-liquid reaction zone 10 of rotary furnace 9. This transfer appropriately may be assisted by a pressurized carrier gas introduced to flow through tube 6 propelling the hot iron, an normally of inert or non-oxidizing composition relative to hot metallic iron, such as recycled and reheated reactor top gas. The delivery end of conduit 9 may also include an oscillating or screw conveyor section, appropriately water-cooled, which may or may not be preceded by an intermediate buffer storage vessel for accumulating hot iron, and out of which the flow into rotary furnace 9 is metered, optimally with a second carrier gas entry point. Rotary furnace 9, rotated on rollers 36, carries a bath of partially melted charge mixture in a gas-solid-liquid reaction zone 10, and is fired by a charge end burner 11 and discharge end burner 12. The hot combustion products 13 exit the rotary furnace charge opening 14 via exhaust duct 15.

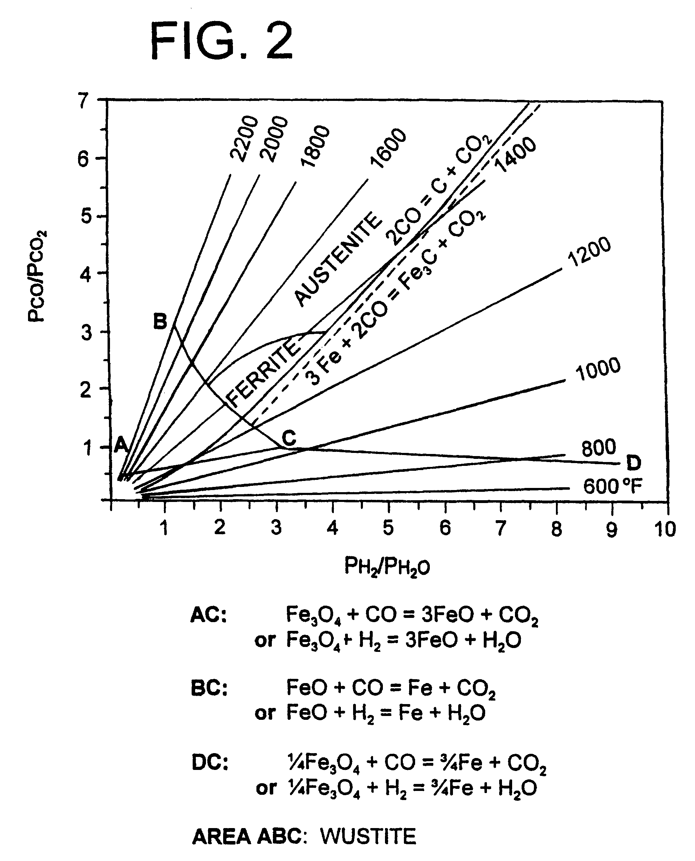

The composition of gases within the upper portion of the gas-solid reaction zone 7 move towards the water-gas equilibrium values with iron and iron oxides as illustrated in diagram Fig. 2. The dust-laden top gases 16, which typically contain about 15 percent moisture, are passed via an intermediate dry cyclone dust collector 17 and/or heat recuperator 18, or directly to a gas cooler-scrubber 19, where cooling takes place, typically to the 40 to 60 C range, with the effect of condensing out and removing the major portion of the contained water vapor, along with the remaining iron oxides and other particulates. After cooling, the composition of dewatered top gas 20 could typically be in the range of about 25-29 per cent CO, 18-22 per cent CO₂, 42-48 per cent H₂, 0.5-2.5 per cent CH₄, 1-3 per cent N₂ and 0.5-2.5 per cent H₂O. More extensive scrubbing and chemical procedures to remove CO₂ optionally may be included to further decrease the oxidation degree and increase the reducing power of the recovered top gases 20. The dust-laden condensate 21 from gas cooler-scrubber 19 may be dewatered, such as in a settling pond, a thickener, or thickener-filter combination, and the dust may be disposed of, or reagglomerated or otherwise reprocessed as a component of charge materials 4. Dust particulates 22 may be similarly recycled.

The cooled, or cooled and partly reheated top gases 20 are compressed by compressor-blower 24 and the major portion 25 is mixed with fresh hydrocarbon 26, such as natural gas containing methane, CH₄, as the major constituent, thereby creating an enriched gas mixture 28 which is reheated by heat exchanger 29 to a temperature generally in the range of 850 to 1150°C and typically 1050°C for introduction as an enriched preheated gas mixture 30 into reactor 1 at a location 37 containing a substantial proportion of reduced metallic iron. This iron acts as a catalyst for gas reforming reactions, for example, converting a major portion of the CH₄ into carbon monoxide, CO and hydrogen, H₂, which are more effective than methane as reducing gases for the iron oxides to metallic iron. Gas mixture 30 is typically at a pressure in the range of 1-2 bar and a flow rate of 800-1500 cubic meters per tonne of iron processed. The hydrocarbons 26 can be introduced at other locations in the circuitry, for example, to avoid possible carbon deposition, or sooting, within heat exchanger 29, hydrocarbons could be introduced into stream 30 following passage through exchanger 29. In this case, they may also be preheated by additional coils in exchangers 18, 29 or 49 illustrated, or by another exchanger.

In the embodiment illustrated, a second portion of top gas 31 is introduced into burner 32 as fuel for combustion with air and/or oxygen 33 within combustion chamber 34, to yield hot combustion products 35 for introduction into heat exchanger 29. The third portion is utilized as fuel 38 for burners 11 and 12, with flow controlled by valves 39, 40 and is introduced with oxygen or oxygen-enriched air 41, as controlled by valves 43, 44, for combustion within rotary furnace 9. Hot combustion products 13, typically at 1600-1800°C and at near-atmospheric pressure, as controlled by water-cooled damper 46, may be conditioned within a dust and slag settling chamber 45, which may include the introduction of fine spray water or steam. The hot conditioned gases 47 are then passed through heat exchanger 29 complementary to hot gases 35, transferring contained sensible heat into recirculated enriched gas mixture 30. Additional heat recuperation may also be accomplished by a heat exchanger 49 adapted for transferring residual sensible heat contained in partially cooled gases 48 to the full stream of dewatered top gas 20. Cooled exhaust gases 50 are vented to atmosphere via exhaust blower 51, exhaust flow control damper 52, dust collector 53, stack 54 and collected particulates 66 are discharged for disposal.

In the gas-solid-liquid reaction zone 10 of furnace 9, gangue constituents contained in the original charge materials 4, such as silica, alumina, etc. form a slag layer 55 to float on the metal bath surface. Fluxing materials, such as lime and dolomite, may be charged by feed pipe or water-cooled oscillating conveyor 56 to adjust and control the slag composition, melting point and fluidity. Additional metallic iron and other metals such as scrap iron and steel, as well as supplementary carbon and alloys, may also be charged directly into zone 10 as supplementary charge material, in addition to the reduced hot metallic iron from reactor 1.

In the embodiment illustrated, the melted charge in the gas-solid-liquid reaction zone 10 is also passed on to a gas-liquid reaction zone 57, as partially separated by annular refractory dam 58, for temperature and composition-adjustment refining prior to discharge. The gas-liquid reaction zone 57 is heated by a discharge end burner 12 and the gas-solid-liquid zone directly by charge end burner 11, supplemented by the available heat remaining in burner 12 combustion products as they pass through gas-solid-liquid reaction zone 10. Discharge of liquid metal may take place either into a ladle 60 via furnace tap hole 59, or via siphon tube 61 into vacuum withdrawal vessel 62, where alloying may be carried out to produce iron or steel of controlled composition for casting. In this mode, a metal throttling valve for the stream through withdrawal vessel discharge nozzle 63 may serve to balance metal outflow with inflow into furnace 9 and regulate the level of metal and slag therein. Liquid metal may be passed directly into tundish 64 enabling continuous casting at a rate corresponding to rate of continuous production through reactor 1 and rotary furnace 10. Since flow of gases within furnace 9 is generally countercurrent to the movement of charge in process, heat output from burner 12 can be adjusted to closely control the discharge temperature.

According to the invention, therefore, the carbon and hydrogen contained in the hydrocarbon employed as fuel and reductant is substantially all fully reacted to H₂O and CO₂, without appreciable discharge of combustibles H₂ and CO. Further, after heat recuperation as in units 18, 29 and 49, the exhausted gases are at relatively low temperature, typically in the area of 500°C or even lower when heat exchanger 49 is included. For example, overall fuel and reductant energy consumption at 40 tons of liquid steel per hour is about 11 GJ per tonne, typically as natural gas. Of the carbon contained in the fuel, mostly combined as methane, CH₄, more than 99 per cent would typically be discharged in waste gases 65, mainly as CO₂, much of the balance being dissolved in the liquid iron and steel product. Of the hydrogen, 60 per cent would typically be discharged as condensed water 21, and 40 per cent contained as water vapor in waste gases 65. Using natural gas, in the embodiment shown with rotary furnace 9 fired with dewatered top gas 20 and oxygen, the minor portion of the top gas is divided approximately half-and-half, between burner 32 and the furnace (burners 11, 12), and amounts to a total of about 560 standard cubic meters per ton of iron produced, or 280 cubic meters each for furnace and combustion chamber, respectively.

Burners 11, 12 and 31 are preferably each valved for alternative firing directly with hydrocarbon fuel, or with recycled top gas, or a combination of these fuels. As well as use during steady-state operations, this can be particularly useful during start-up periods. For example, combustion chamber 32 can be fired with natural gas and a deficiency of oxidant to externally generate a reducing gas at 35 by partial combustion, which is by-passed to substitute for, and augment top gases 20 for entry into blower 24 and then be enriched at 26,27. Furnace 9 may be fired at the same time with natural gas, utilizing the combustion products 13 in exchanger 29 to adjust the temperature of gases 30 entering the reactor for cracking and reduction of a stationary or only periodically descending charge. As firing and feed rates are increased, the system may then be progressively transferred to a steady-state mode such as illustrated. Burners 11 and 12 could be fired with natural gas, or with preheated air rather than oxygen during steady-state operation, and oxygen could be employed to fire chamber 34, or they could be fired with fuel oil, powdered coal or other hydrocarbons, these selections being influenced by comparative costs.

Fig. 1 is a simplified diagram illustrative of the concept, and numerous details, such as bypasses, sensors and controls are not shown. It is also intended to encompass numerous variations. For example, separate recuperation and discharge circuits could be employed for rotary furnace combustion products 13 and combustion chamber products 35, considering that the former contains some loading of particulates and the latter does not. In either case, the hot gas entry (bottom, as illustrated) would typically be of ceramic, rather than metallic construction, considering the high temperatures. A regenerative exchanger system could also be employed. These numerous variations are known and available from the art of industrial heat transfer. Also, a cloth filter dust collector would usually require some additional cooling of exhaust gases 51, usually by dilution with supplementary air, atomized water or steam. Supplementary steam can also be introduced, in addition to hydrocarbon 26, as part of enriched gas mixture 28, such as when depressed deposition of carbon is desired or possible enhancement of reforming and other reactions as within zone 37. Likewise, some components may be omitted, for example, heat exchanger 18 or 29, or both of them, could be eliminated with principal effect only some increase in fuel usage and process heat consumption.

Referring to Fig. 2, it will also be seen that iron oxide reduction to iron carbide, Fe₃C, is favored over reduction to metallic iron at temperatures below about 670-770°C. At such lower temperature, decomposition of hydrocarbons such as methane, particularly in the presence of iron as a catalyst, may also result in the deposition of carbon as soot or the like on the surface or the iron particles, also increasing the carbon content of the iron in the reactor discharge. In the art of iron reduction, reactors are known of the fluidized bed, shaft furnace or retort type, designed specifically to yield solid iron carbide product, typically operating in the 550-600°C temperature range. The general flowsheet, Fig. 1, may also incorporate these lower-temperature reactors as reactor 1, adjusting flow rates, temperatures and pressures according to the modified material and energy balances involved.

In another variation, according to known reduction reactor practice, cooling recarburizing gas containing supplementary hydrocarbon, usually methane in natural gas, is injected into the lower section of the reactor between gas inlet 3 and solids outlet 5, with the effect of converting a substantial proportion of the iron into iron carbide, Fe₃C, prior to transfer into rotary furnace 9. In these circumstances, the iron-bearing material transferred will contain from about 2 to 6 per cent carbon by weight, the value within this range depending upon the proportion of iron combined with carbon as iron carbide, as well as free elemental carbon deposited. After carburization takes place, the gas flows upwards within the reactor to mix with the reducing gases formed by injection of enriched gas mixture 4 at inlet 3. A substantial proportion of this carbon becomes available as fuel for combustion within the rotary furnace, or residual post-combustion in chamber 45. Carbon oxidation may also be initiated by direct oxygen lance injection into bath 42, generating a CO/CO₂ mixture, with the CO being post-combusted to CO₂ above the bath or within chamber 45.

It will be appreciated that a process for direct iron and steelmaking from iron ore material or the like has been described and illustrated and that modifications and variations may be made by those skilled in the art, without departing from the scope of the invention defined in the appended claims.

## Claims

1. A process for direct iron and steelmaking comprising the following steps, in combination:
a) maintaining a gas-solid reaction zone within a reduction reactor adapted for heating and reduction of a charge of iron oxide materials to obtain metallic iron, by contact with hot process gases continaining H₂ and CO;
b) maintaining a gas-solid-liquid reaction zone within a rotary furnace adapted for melting within a partially fused bath by heat transferred from the rotating furnace walls in contact with said bath during furnace rotation;
c) feeding iron oxide materials into said reduction reactor;
d) transferring said solid metallic iron from said gas-solid reaction zone into said gas-solid-liquid reaction zone substantially without cooling or exposure to the outside atmosphere of said iron;
e) supplying heat by introducing fuel and oxidant for combustion to form hot gaseous combustion products comprising CO₂ and H₂O within said rotary furnace from which heat is transferred to said walls and said bath, thereby melting said solid metallic iron to form liquid metallic iron in said gas-solid-liquid reaction zone;
f) exhausting top gas containing H₂O and CO₂ as well as unreacted H₂ and CO from said gas-solid reaction zone;
g) removing a major portion of the H₂O contained in said top gas;
h) mixing a major portion of said dewatered top gas together with reducing gases to form an enriched gas mixture;
i) exhausting said gaseous combustion products of said fuel and oxidant in step (e) from said rotary furnace and transferring sensible heat contained therein to comprise sensible heat of said enriched gas mixture from step (h);
j) supplying additional heat to said enriched gas mixture sufficient to sustain said heating and reduction of iron oxide materials to yield hot solid metallic iron;
k) recycling said enriched gas mixture into said reduction reactor; and
l) discharging of said liquid metallic iron and slag from said gas-solid-liquid reaction zone.

2. A process according to claim 1 wherein said reducing gases in step (h) comprise hydrocarbons and step (k) includes recycling said enriched gas mixture into said reduction reactor at a location to contact reduced metallic iron, said iron acting as a catalyst for reacting, in substantial proportion, said hydrocarbons to form H₂ and CO contained in said hot process gases which react with said iron oxide materials to yield said solid metallic iron.

3. A process according to claim 1 wherein step (j) comprises combusting a minor portion of said dewatered top gas with oxidant to produce hot gaseous combustion products and transferring sensible heat contained therein to comprise sensible heat of said enriched gas mixture from step (g).

4. A process according to claim 1 wherein said reducing gases in step (h) comprise hydrocarbons and step (k) includes recycling said enriched gas mixture into said reduction reactor at a location to contact reduced metallic iron, said iron acting as a catalyst for reacting, in substantial proportion, said hydrocarbons to form H₂ and CO contained in said hot process gases which react with said iron oxide materials to yield said solid metallic iron and step (j) comprises combusting a minor portion of said dewatered top gas with oxidant to produce hot gaseous combustion products and transferring sensible heat contained therein to comprise sensible heat of said enriched gas mixture from step (h).

5. A process according to claim 1 wherein said reducing gases in step (h) comprise H₂ and CO obtained by catalytic reforming by reaction of hydrocarbons with H₂O.

6. A process according to claim 1 wherein said reducing gases in step (h) comprise a partially oxidized combustion product containing H₂ and CO from partial combustion of hydrocarbons with oxygen.

7. A process according to claim 1 wherein said reducing gases in step (h) comprise H₂ and CO obtained by catalytic reforming by reaction of hydrocarbons with a major portion of said dewatered top gas from step (g).

8. A process according to claim 1 wherein said reducing gases in step (h) comprise H₂ and CO obtained by catalytic reforming by reaction of hydrocarbons with a major portion of said dewatered top gas from step (g); and step (j) comprises combusting a minor portion of said dewatered top gas with oxidant to produce hot gaseous combustion products and transferring sensible heat contained therein to comprise sensible heat of said enriched gas mixture from step (h).

9. A process according to claim 1 also including the step of introducing fluxing materials into said gas-solid-liquid reaction zone to mix with the gangue, impurities and residual oxides of said iron oxide materials comprising a layer of slag forming to float upon said partially fused bath in step (b) and discharging said slag in step (l), in addition to said liquid metallic iron.

10. A process according to claim 1 wherein step (g) also includes removing a major portion of the CO₂ contained in said top gas wehreby said dewatered top gas also contains substantially less CO₂ than said top gas.

11. A process according to claim 1, 2, 3, 4, 5, 6, 7, 8, 9 or claim 10, wherein said fuel for combustion within said rotary furnace in step (e) comprises another minor portion of said dewatered top gas.

12. A process according to claim 1, 2, 3, 4, 5, 6, 7, 8, 9 or claim 10, wherein the major portion of said oxidant supplied in step (e) comprises gaseous oxygen.

13. A process according to claim 3, claim 4 or claim 8, wherein the major portion of said oxidant supplied in step (e) comprises gaseous oxygen and the major portion of said oxidant supplied in step (i) comprises air.

14. A process according to claim 1, 2, 3, 4, 5, 6 ,7, 8, 9 or claim 10, wherein enriched gas mixture from step (h) is heated to a temperature in the range of 850-1150°C by steps (i) and (j) for recycling in step (k).

15. A process according to claim 1, 2, 3, 4, 5, 6, 7, 8, 9, or claim 10 wherein enriched gas mixture from step (g) is heated to a temperature in the range of 1000-1100°C by steps (i) and (j) for recycling in step (k).

16. A process according to claim 1, 2, 3, 4, 5, 6, 7, 8, 9 or claim 10, also including the step of introducing additional materials, such as scrap iron and steel, fluxing materials, alloying materials and carbon as additives directly into said rotary furnace for melting and reaction along with said metallic iron transferred from said reactor in step (d).

17. A process according to claim 1, 2, 3, 4, 5, 6, 7, 8, 9 or claim 10, also including the step of extracting sensible heat contained in the top gas in step (g) prior to said removing of water vapor, for in-process recovery and recycling as part of the sensible heat contained in said enriched gas mixture in step (k).

18. A process according to claim 1, 2, 3, 4, 5, 6, 7, 8, 9 or claim 10, in which a layer of slag, including constituents from fusion of gangue and residual iron oxides contained in said iron oxide materials, has formed floating on the partially fused bath in step (b), also including the steps of:
providing a gas-liquid reaction zone within said rotary furnace into which said discharging of liquid metallic iron and slag in step (l) takes place;
adjusting the temperature and composition of said liquid iron by controlled combustion of fuel and oxidant within said gas-liquid reaction zone to yield liquid iron and steel of controlled temperature and composition; and discharging said liquid iron and steel from the gas-liquid reaction zone; and
discharging the major portion of said slag from said gas-liquid reaction zone separately from the metal.

19. A process according to claim claim 1,2,3,4,5,6,7,8,9 or claim 10, in which a layer of slag, including constituents from fusion of gangue and residual iron oxides contained in said iron oxide materials, has formed floating on the partially fused bath in step (b), also including the steps of:
providing a gas-liquid reaction zone within said rotary furnace into which said discharging of liquid metallic iron and slag in step (l) takes place;
adjusting the temperature of said liquid iron by controlled combustion of fuel and oxidant within said gas-liquid reaction zone;
siphoning the molten metallic iron from said rotary furnace into a vacuum withdrawal vessel;
making alloy additions to said withdrawal vessel to adjust the composition of said liquid iron prior to casting; and
discharging the major portion of said slag from said gas-liquid reaction zone separately from the metal.

20. A process according to claim 1, 2, 3, 4, 5, 6, 7, 8, 9 or claim 10, in which a layer of slag, including constituents from fusion of gangue and residual iron oxides contained in said iron oxide materials, has formed floating on the partially fused bath in step (b), also including the steps of;
providing a gas-liquid reaction zone within said rotary furnace into which said discharging of liquid metallic iron and slag in step (1) takes place;
controlling and adjusting the temperature of said liquid iron by controlled combustion of fuel and oxidant within said gas-liquid reaction zone;
siphoning the liquid metallic iron from said rotary furnace into a vacuum withdrawal vessel in which said steps (a) to (l) inclusive and said siphoning are being conducted concurrently and continuously; and
discharging the major portion of said slag from said gas-liquid reaction zone separately from the metal..

21. A process according to claim 1,2,3,4,5,6,7,8,9 or claim 10, also including the steps of providing a gas-liquid reaction zone within said rotary furnace into which said discharging of liquid metallic iron and slag in step (l) takes place;
heating said gas-liquid reaction zone directly by a burner proximate the discharge end of said rotary furnace thereby controlling the temperature of said discharging liquid iron and steel; and
heating said gas-solid-liquid reaction zone directly by a charge end burner in combination with heat from combustion products of said discharge end burner flowing through said gas-solid-liquid reaction zone countercurrent to the general movement of the charge through said rotary furnace.

22. A process according to claim 1, 2, 3, 4, 5, 6, 7, 8, 9 or claim 10, wherein step (a) also yields iron carbide as a solid chemical compound which is also transferred into said rotary furnace along with said metallic iron in step (d) and in which said enriched gas mixture from step (h) is heated only to a temperature in the range of about 500 to 850°C by steps (i) and (j).

23. A process according to claim 1,2,3,4,5,6,7,8,9 or claim 10, also including the step of injecting supplementary hydrocarbon into said reactor prior to said transferring in step (d) for reaction with iron to yield iron carbide as a solid chemical compound, replacing a portion of said metallic iron as the material yielded in step (a) and transferred to said rotary furnace in step (d).

## Patentansprüche

1. Verfahren zur direkten Gewinnung von Eisen und Stahl, umfassend folgende Schritte in Kombination:
a) Aufrechthalten einer Gas-Festkörper-Reaktionszone in einem Reduktionsreaktor zum Heizen und Reduzieren einer Beschickung von Eisenoxidstoffen, wobei durch den Kontakt mit den heißen H₂- und CO- haltigen Prozessgasen Eisenmetall gewonnen wird;
b) Aufrechthalten einer Gas-Festkörper-Flüssigkeits-Reaktionszone in einem Drehofen und Schmelzen eines partiellen Schmelzbads, indem beim Drehen des Ofens über die Drehofenwänden, welche in Kontakt mit dem Bad sind, Wärmeenergie eingebracht wird;
c) Einspeisen von Eisenoxidmaterialien in den Reduktionsreaktor;
d) Überführen des festen metallischen Eisens aus der Gas-Festkörper-Reaktionszone in die Gas-Festkörper-Flüssigkeits-Reaktionszone, im Wesentlichen ohne es zu einem Abkühlen oder einem Kontakt des Eisens mit der Umgebungsatmosphäre kommt zu lassen;
e) Zuführen von Wärmeenergie durch Zuschießen von Brenn- und Oxidationsmittel für eine Verbrennung, wobei in dem Drehofen heiße gasförmige CO₂- und H₂Ohaltige Verbrennungsprodukte erhalten werden, welche Wärmeenergie an die Wände und das Bad abgeben, so dass das feste Eisenmetall schmilzt und in der Gas-Festkörper-Flüssigkeits-Reaktionszone flüssiges Eisenmetall vorliegt;
f) Abziehen der H₂O- und CO₂-haltigen Topgase sowie von nicht umgesetztem H₂ und CO aus der Gas-Festkörper-Reaktionszone;
g) Entfernen des größeren Teils des H₂O, das im Topgas enthalten ist;
h) Mischen eines größeren Teils des entwässerten Topgases mit den Reduktionsgasen, so dass eine angereicherte Gasmischung erhalten wird;
i) Abziehen der gasförmigen Verbrennungsprodukte aus den Brenn- und Oxidationsmitteln von Schritt (e) aus dem Drehofen und Überführen einer vernünftigen Wärmeinhalts hieraus, so dass die angereicherte Gasmischung von Schritt (h) einen vernünftige Wärmeinhalt hat;
j) Zuführen weiterer Wärme in die angereicherte Gasmischung in einem Maß, dass weiterhin die Eisenoxidstoffe erwärmt und reduziert werden und heißes festes Eisenmetall gewonnen wird;
k) Rückführen der angereicherten Gasmischung in den Reduktionsreaktor; und
l) Ablassen des flüssigen Eisenmetalls und der Schlacke aus der Gas-Festkörper-Flüssigkeits-Reaktionszone.

2. Verfahren nach Anspruch 1, wobei in Schritt (h) die reduzierenden Gase Kohlenwasserstoffe enthalten und der Schritt (k) das Rückführen der angereicherten Gasmischung in den Reaktionsreaktor an einer Stelle umfasst, so dass sie das reduzierte Eisenmetall kontaktieren, wobei das Eisen im erheblichem Maß als Katalysator bei der Umsetzung der Kohlenwasserstoffe zu H₂ und CO beteiligt ist, welche dann in den heißen Prozessgasen enthalten sind, die mit den Eisenoxidstoffen unter Gewinnung von festem Eisenmetall umgesetzt werden.

3. Verfahren nach Anspruch 1, wobei der Schritt (j) das Verbrennen eines kleineren Teils des entwässerten Topgases mit einem Oxidationsmittel umfasst, wobei heiße gasförmige Verbrennungsprodukte erhalten werden, und das Überführen eines vernünftigen Wärmeinhalts hieraus, so dass die angereicherte Gasmischung aus Schritt (g) einen vernünftigen Wärmeinhalt hat.

4. Verfahren nach Anspruch 1, wobei die Reduktionsgase in Schritt (h) Kohlenwasserstoffe enthalten,
der Schritt (k) das Rückführen der angereicherten Gasmischung in den Reduktionsreaktor an einer Stelle beinhaltet, wo es das reduzierte Eisenmetall kontaktiert, wobei das Eisen in erheblichem Maß als Katalysator wirkt bei der Umsetzung der Kohlenwasserstoffe zu H₂ und CO in den heißen Prozessgasen, welche sich mit den Eisenoxidstoffen unter Bildung von festem Eisenmetall umsetzen,
und der Schritt (j) das Verbrennen eines kleineren Teils des entwässerten Topgases mit einem Oxidationsmittel beinhaltet, so dass heiße gasförmige Verbrennungsprodukte erzeugt werden, und das Übertragen eines vernünftigen Wärmeinhalts hieraus, so dass das angereicherte Gas aus Schritt (h) einen vernünftigen Wärmeinhalt erhält.

5. Verfahren nach Anspruch 1, wobei die Reduktionsgase in Schritt (h) H₂ und CO enthalten, die durch katalytisches Reformieren und Umsetzung der Kohlenwasserstoffe mit H₂O gewonnen werden.

6. Verfahren nach Anspruch 1, wobei die Reduktionsgase in Schritt (h) ein teiloxidiertes Verbrennungsprodukt enthält, das H₂ und CO aus der partiellen Verbrennung der Kohlenwasserstoffe mit Sauerstoff umfasst.

7. Verfahren nach Anspruch 1, wobei die Reduktionsgase in Schritt (h) H₂ und CO enthalten, die durch katalytisches Reformieren und Umsetzen der Kohlenwasserstoffe mit einem größeren Teil des entwässerten Topgases aus Schritt (g) erzeugt werden.

8. Verfahren nach Anspruch 1, wobei die Reduktionsgase in Schritt (h) H₂ und CO enthalten, die durch katalytisches Reformieren und Umsetzen der Kohlenwasserstoffe mit einem größeren Teil des entwässerten Topgases aus Schritt (e) erzeugt werden, und der Schritt (j) das Verbrennen eines kleineren Teils des entwässerten Topgases mit einem Oxidationsmittel beinhaltet, wobei heiße gasförmige Verbrennungsprodukte erzeugt werden, und das Überführen eines vernünftigen Wärmeinhalts hieraus, so dass das angereicherte Gas aus Schritt (h) einen vernünftigen Wärmeinhalt besitzt.

9. Verfahren nach Anspruch 1, zudem umfassend den Schritt des Zuführens vom Flussmaterialien in die Gas-Festkörper-Flüssigkeits-Reaktionszone, so dass Gang, Verunreinigungen und restliche Oxide aus dem Eisenoxidstoffen vermischt werden, umfassend eine aufschwimmende Schlackenschicht auf dem partiellen Schmelzbad von Schritt (b), und Ablassen der Schlacke in Schritt (l) neben dem flüssigen Eisenmetall.

10. Verfahren nach Anspruch 1, wobei der Schritt (g) zudem das Entfernen eines größeren Teils des CO₂ umfasst, das im Topgas enthalten ist, so dass entwässertes Topgas zudem erheblich weniger CO₂ als das Topgas enthält.

11. Verfahren nach Anspruch 1, 2, 3, 4, 5, 6, 7, 8, 9 oder 10, wobei in Schritt (e) der Brennstoff für die Verbrennung im Drehofen einen weiteren kleineren Teil des entwässerten Topgases enthält.

12. Verfahren nach Anspruch 1, 2, 3, 4, 5, 6, 7, 8, 9 oder 10, wobei der größere Teil des in Schritt (e) zugeführten Oxidationsmittels gasförmigen Sauerstoff enthält.

13. Verfahren nach Anspruch 3, 4 oder 8, wobei der größere Teil des in Schritt (e) zugeführten Oxidationsmittels gasförmigen Sauerstoff enthält und der größere Teil des in Schritt (i) zugeführten Oxidationsmittels Luft enthält.

14. Verfahren nach Anspruch 1, 2, 3, 4, 5, 6, 7, 8, 9 oder 10, wobei durch die Schritte (i) und (j) für die Rückführung in den Schritt (k) die angereicherte Gasmischung von Schritt (h) auf eine Temperatur im Bereich von 850 bis 1150°C erwärmt wird.

15. Verfahren nach Anspruch 1, 2, 3, 4, 5, 6, 7, 8, 9 oder 10, wobei durch die Schritte (i) und (j) für die Rückführung in den Schritt (k) die angereicherte Gasmischung von Schritt (g) auf eine Temperatur im Bereich von 1000 bis 1100°C erwärmt wird.

16. Verfahren nach Anspruch 1, 2, 3, 4, 5, 6, 7, 8, 9 oder 10, zudem umfassend den Schritt des direkten Zugebens von weiteren Zuschlagsstoffen wie Eisenschrott, Stahl, Flussmaterialien, Legierungsstoffe und Kohlenstoff in den Drehofen, so dass sie zusammen mit dem Eisenmetall, das in Schritt (d) aus dem Reaktor überführt wird, schmelzen und umgesetzt werden.

17. Verfahren nach Anspruch 1, 2, 3, 4, 5, 6, 7, 8, 9 oder 10, zudem umfassend den Schritt des Herausziehens eines vernünftigen Wärmeinhalts aus dem Topgas von Schritt (g), noch bevor Wasserdampf entfernt wird, zur innerprozessuale Gewinnung und Rückführung, als Zuteil des vernünftigen Wärmeinhalts im angereicherten Gas von Schritt (k).

18. Verfahren nach Anspruch 1, 2, 3, 4, 5, 6, 7, 8, 9 oder 10, wobei die Schlackenschicht, welche Bestandteile aus der Schmelze des Gangs und der restlichen im Eisenoxidmaterial enthaltenen Eisenoxide umfasst, auf dem partiellen Schmelzbad in Schritt (b) aufschwimmt, zudem die Schritte umfasst:
Bereitstellen einer Gas-Flüssigkeits-Reaktionszone in dem Drehofen, in dem in Schritt (l) ein Ablassen von flüssigem Eisenmetall und Schlacke erfolgt;
Einstellen der Temperatur und der Zusammensetzung des flüssigen Eisens durch kontrollierte Verbrennung von Brenn- und Oxidationsmittel in der Gas-Flüssig-Reaktionszone, so dass man flüssiges Eisen und Stahl mit kontrollierter Temperatur und Zusammensetzung erhält;
Ablassen des flüssigen Eisens und Stahls aus der Gas-Flüssigkeit-Reaktionszone; und
Ablassen des größeren Teils der Schlacke aus der Gas-Flüssigkeit-Reaktionszone getrennt vom Metall.

19. Verfahren nach Anspruch 1, 2, 3, 4, 5, 6, 7, 8, 9 oder 10, wobei die Schlackenschicht, welche Bestandteile aus der Schmelze des Gangs und der restlichen im Eisenoxidmaterial enthalten Eisenoxide enthält, auf dem partiellen Schmelzbad von Schritt (b) aufschwimmt, umfassend die Schritte:
Bereitstellen einer Gas-Flüssigkeits-Reaktionszone in dem Drehofen, in dem in Schritt (l) das flüssige Eisenmetall sowie die Schlacke abgelassen wird;
Einstellen der Temperatur des flüssigen Eisens durch eine kontrollierte Verbrennung von Brenn- und Oxidationsmitteln in der Gas-Flüssigkeits-Reaktionszone; und
Absaugen des geschmolzenen Eisenmetalls aus dem Drehofen in einen Vakuum-Abzugsbehälter;
Vornehmen von Legierungszuschlägen in den Abzugsbehälter, um vor dem Guss die Zusammensetzung des flüssigen Eisens einzustellen; und
Ablassen des größeren Teils der Schlacke aus der Gas-Flüssigkeits-Reaktionszone getrennt vom Metall.

20. Verfahren nach Anspruch 1, 2, 3, 4, 5, 6, 7, 8, 9 oder 10, wobei die Schlackenschicht, welche Bestandteile aus der Schmelze des Gangs und der restlichen im Eisenoxidmaterial enthalten Eisenoxide enthält, in Schritt (b) auf dem partiellen Schmelzbad aufschwimmt, umfassend die Schritte:
Bereitstellen einer Gas-Flüssigkeits-Reaktionszone in dem Drehofen, in dem in Schritt (l) das Ablassen des flüssigen Eisenmetalls und der Schlacke erfolgt;
Regeln und Einstellen der Temperatur des flüssigen Eisens durch kontrollierte Verbrennung von Brenn- und Oxidationsmitteln in der Gas-Flüssigkeits-Reaktionszone;
Absaugen des flüssigen Eisenmetalls aus dem Drehofen in einen Vakuum-Abzugsbehälter, in dem die Schritte (a) bis einschließlich (l) und das Absaugen gleichzeitig und kontinuierlich erfolgen; und
Ablassen des größeren Teils der Schlacke aus der Gas-Flüssigkeits-Reaktionszone getrennt vom Metall.

21. Verfahren nach Anspruch 1, 2, 3, 4, 5, 6, 7, 8, 9 oder 10, umfassend auch den Schritt des Bereitstellens einer Gas-Flüssigkeits-Reaktionszone im Drehofen, in den in Schritt (1) das flüssige Eisenmetall und die Schlacke abgelassen wird;
Erwärmen der Gas-Flüssigkeits-Reaktionszone direkt durch einen Brenner nahe am Ablassende des Drehofens und Regeln der Temperatur des ablaufenden flüssigen Eisens und Stahls; und
Erwärmen der Gas-Festkörper-Flüssigkeits-Reaktionszone direkt durch einen Ablassendenbrenner in Verbindung mit der Wärme der Verbrennungsprodukte des Ablassendenbrenners, die durch die Gas-Festkörper-Flüssigkeits-Reaktionszone gegenläufig zur allgemeinen Bewegung der Beladung durch den Drehofen strömen.

22. Verfahren nach Anspruch 1, 2, 3, 4, 5, 6, 7, 8, 9 oder 10, wobei in Schritt (a) auch Eisencarbid als feste chemische Verbindung gewonnen wird, das auch in Schritt (d) aus dem Drehofen zusammen mit dem Eisenmetall abgelassen wird, und in der die angereicherte Gasmischung aus Schritt (h) nur auf eine Temperatur im Bereich von 500 bis 850°C durch die Schritte (i) und (j) erwärmt wird.

23. Verfahren nach Anspruch 1, 2, 3, 4, 5, 6, 7, 8, 9 oder 10, zudem umfassend den Schritt der Injektion von zusätzlichem Kohlenwasserstoff in den Reaktor, vor der Überführung in Schritt (d), für die Umsetzung mit Eisen, so dass man Eisencarbid als feste chemische Verbindung erhält, anstelle eines Teils des metallischen Eisens als das in Schritt (a) erbeuteten und in Schritt (d) in den Drehofen überführten Materials.

## Revendications

1. Procédé de fabrication directe de fer et d'acier, comprenant les étapes suivantes en combinaison :
a) le maintien d'une zone de réaction gaz-solide dans un réacteur de réduction destiné au chauffage et à la réduction d'une charge de matériau à base d'oxyde de fer pour l'obtention de fer métallique, par contact avec des gaz chauds de traitement contenant H₂ et CO,
b) le maintien d'une zone de réaction gaz-solide-liquide dans un four rotatif destiné à la fusion dans un bain partiellement fondu à l'aide de chaleur transférée par les parois du four rotatif au contact du bain pendant la rotation du four,
c) la transmission de matériaux à base d'oxyde de fer dans le réacteur de réduction,
d) le transfert du fer métallique solide de la zone de réaction gaz-solide à la zone de réaction gaz-solide-liquide pratiquement sans refroidissement ni exposition à l'atmosphère externe du fer,
e) la transmission de chaleur par introduction d'un combustible et d'un oxydant destinés à une combustion pour la formation de produits gazeux chauds de combustion contenant CO₂ et H₂O dans le four rotatif à partir duquel la chaleur est transférée aux parois et au bain, si bien que le fer métallique solide est fondu en formant du fer métallique liquide dans la zone de réaction gaz-solide-liquide,
f) l'évacuation des gaz de la partie supérieure contenant H₂O et CO₂ ainsi que H₂ et CO qui n'ont pas réagi, hors de la zone de réaction gaz-solide,
g) l'extraction d'une partie essentielle de H₂O contenue dans le gaz de la partie supérieure,
h) le mélange d'une partie essentielle de ce gaz déshydraté de la partie supérieure avec les gaz de réduction pour la formation d'un mélange de gaz enrichi,
i) l'évacuation des produits gazeux de combustion du combustible et de l'oxydant de l'étape (e) hors du four rotatif et le transfert de la chaleur sensible contenue afin qu'elle forme la chaleur sensible du mélange de gaz enrichi provenant de l'étape (h),
j ) la transmission de chaleur supplémentaire au mélange de gaz enrichi suffisamment pour entretenir le chauffage et la réduction des matériaux contenant de l'oxyde de fer avec obtention de fer métallique solide chaud,
k) le recyclage du mélange de gaz enrichi dans le réacteur de réduction, et
l) l'évacuation du fer métallique liquide et du laitier de la zone de réaction gaz-solide-liquide.

2. Procédé selon la revendication 1, dans lequel les gaz de réduction de l'étape (h) comprennent des hydrocarbures et l'étape (k) comprend le recyclage du mélange de gaz enrichi dans le réacteur de réduction à un emplacement assurant le contact avec le fer métallique réduit, le fer agissant comme catalyseur pour la réaction, en proportion importante, des hydrocarbures avec formation de H₂ et CO contenus dans les gaz de traitement chaud qui réagissent avec les matériaux à base d'oxyde de fer pour donner le fer métallique solide.

3. Procédé selon la revendication 1, dans lequel l'étape (j) comprend la combustion d'une petite partie du gaz déshydraté de la partie supérieure avec un oxydant pour la production de produits gazeux chauds de combustion et le transfert de la chaleur sensible qu'ils contiennent afin qu'elle forme la chaleur sensible du mélange gazeux enrichi provenant de l'étape (g).

4. Procédé selon la revendication 1, dans lequel les gaz de réduction de l'étape (h) comprennent des hydrocarbures, et l'étape (k) comprend le recyclage du mélange de gaz enrichi vers le réacteur de réduction à un emplacement assurant le contact avec le fer métallique réduit, le fer agissant comme catalyseur pour la réaction, en proportion notable, des hydrocarbures afin qu'ils forment H₂ et CO contenus dans les gaz chauds de traitement qui réagissent avec les matériaux à base d'oxyde de fer pour donner le fer métallique solide, et l'étape (j) comprend la combustion d'une petite partie du gaz déshydraté de la partie supérieure avec un oxydant pour la production de produits gazeux chauds de combustion et le transfert de la chaleur sensible qu'ils transfèrent pour la formation de chaleur sensible du mélange gazeux enrichi provenant de l'étape (h).

5. Procédé selon la revendication 1, dans lequel les gaz de réduction de l'étape (h) contiennent H₂ et CO obtenus par reformage catalytique par réaction des hydrocarbures avec H₂O.

6. Procédé selon la revendication 1, dans lequel des gaz de réduction de l'étape (h) comprennent un produit partiellement oxydé de combustion contenant H₂ et CO provenant de la combustion partielle des hydrocarbures avec l'oxygène.

7. Procédé selon la revendication 1, dans lequel les gaz de réduction de l'étape (h) contiennent H₂ et CO obtenus par reformage catalytique par réaction des hydrocarbures avec une proportion essentielle du gaz déshydraté de la partie supérieure provenant de l'étape (g).

8. Procédé selon la revendication 1, dans lequel les gaz de réduction de l'étape (h) contiennent H₂ et CO obtenus par reformage catalytique par réaction des hydrocarbures avec une proportion essentielle du gaz déshydraté de la partie supérieure provenant de l'étape (g), et l'étape (j) comprend la combustion d'une petite partie du gaz déshydraté de la partie supérieure avec un oxydant pour la production de produits gazeux chauds de combustion et le transfert de la chaleur sensible contenue par ces gaz sous forme de chaleur sensible du mélange gazeux enrichi provenant de l'étape (h).

9. Procédé selon la revendication 1, comprenant en outre une étape d'introduction de matériau fondant dans la zone de réaction gaz-solide-liquide afin qu'il se mélange avec la gangue, les impuretés et les oxydes résiduels des matériaux à base d'oxyde de fer comprenant une couche de laitier qui se forme et flotte sur le bain partiellement fondu dans l'étape (b), et l'évacuation du laitier dans l'étape (l), en plus du fer métallique liquide.

10. Procédé selon la revendication 1, dans lequel l'étape (g) comprend aussi l'extraction d'une partie essentielle de CO₂ contenue dans le gaz de la partie supérieure, si bien que le gaz déshydraté de la partie supérieure contient aussi notablement moins de CO₂ que le gaz de la partie supérieure.

11. Procédé selon la revendication 1, 2, 3, 4, 5, 6, 7, 8, 9 ou 10, dans lequel le combustible de combustion dans le four rotatif dans l'étape (c) contient une autre petite partie du gaz déshydraté de la partie supérieure.

12. Procédé selon la revendication 1, 2, 3, 4, 5, 6, 7, 8, 9 ou 10, dans lequel la plus grande partie de l'oxydant transmis dans l'étape (e) est de l'oxygène gazeux.

13. Procédé selon la revendication 3, 4 ou 8, dans lequel la plus grande partie de l'oxydant transmis dans l'étape (e) contient de l'oxygène gazeux et la plus grande partie de l'oxydant transmis dans l'étape (i) est de l'air.

14. Procédé selon la revendication 1, 2, 3, 4, 5, 6, 7, 8, 9 ou 10, dans lequel le mélange de gaz enrichi provenant de l'étape (h) est chauffé à une température comprise entre 850 et 1 150 °C dans les étapes (i) et (j) pour être recyclé dans l'étape (k).

15. Procédé selon la revendication 1, 2, 3, 4, 5, 6, 7, 8, 9 ou 10, dans lequel le mélange de gaz enrichi de l'étape (g) est chauffé à une température comprise entre 1 000 et 1 100 °C dans les étapes (i) et (j) pour le recyclage dans l'étape (k).

16. Procédé selon la revendication 1, 2, 3, 4, 5, 6, 7, 8, 9 ou 10, comprenant l'étape d'introduction de matériaux supplémentaires, tels que des déchets de fer et d'acier, des matériaux fondants, des matériaux d'alliage et du carbone comme adjuvants directement dans le four rotatif pour la fusion et la réaction avec le fer métallique transféré du réacteur dans l'étape (d).

17. Procédé selon la revendication 1, 2, 3, 4, 5, 6, 7, 8, 9 ou 10, comprenant aussi l'étape d'extraction de la chaleur sensible contenue dans le gaz de la partie supérieure dans l'étape (g) avant l'extraction de la vapeur d'eau, pour la récupération dans le procédé et le recyclage comme partie de la chaleur sensible contenue dans le mélange gaz enrichi dans l'étape (k).

18. Procédé selon la revendication 1, 2, 3, 4, 5, 6, 7, 8, 9 ou 10, dans lequel une couche de laitier, comprenant des agents constituant de la fusion de la gangue et des oxydes de fer résiduels contenus dans les matériaux à base d'oxyde de fer, s'est formée et flotte sur le bain partiellement fondu dans l'étape (b), et comprenant aussi les étapes suivantes :
la disposition d'une zone de réaction gaz-liquide dans le four rotatif dans lequel a lieu l'évacuation du fer métallique liquide et du laitier dans l'étape (l),
l'ajustement de la température et de la composition du fer liquide par combustion contrôlée du combustible et de l'oxydant dans la zone de réaction gaz-liquide pour l'obtention de fer et d'acier liquide à température et composition réglées, et l'évacuation du fer et de l'acier liquide de la zone de réaction gaz-liquide, et
l'évacuation de la plus grande partie du laitier de la zone de réaction gaz-liquide séparément du métal.

19. Procédé selon la revendication 1, 2, 3, 4, 5, 6, 7, 8, 9 ou 10, dans lequel une couche de laitier, ayant des ingrédients de fusion de la gangue et d'oxydes de fer résiduels contenus dans les matériaux à base d'oxyde de fer s'est formée et flotte sur le bain partiellement fondu dans l'étape (b), et comprenant aussi les étapes suivantes :
la disposition d'une zone de réaction gaz-liquide dans le four rotatif dans lequel a lieu l'évacuation du fer métallique liquide et du laitier dans l'étape (l),
l'ajustement de la température du fer liquide par combustion contrôlée de combustible et d'oxyde dans la zone de réaction gaz-liquide,
le siphonnage du fer métallique fondu du four rotatif dans un réservoir d'extraction par le vide,
l'exécution d'additions d'alliage dans le réceptacle d'extraction pour l'ajustement de la composition du fer liquide avant la coulée, et
l'évacuation de la plus grande partie du laitier de la zone de réaction gaz-liquide séparément du métal.

20. Procédé selon la revendication 1, 2, 3, 4, 5, 6, 7, 8, 9 ou 10, dans lequel une couche de laitier, contenant des ingrédients de fusion de la gangue et d'oxydes de fer résiduels contenus dans des matériaux d'oxydes de fer s'est formée et flotte sur le bain partiellement fondu dans l'étape (b), et comprenant aussi les étapes suivantes :
la disposition d'une zone de réaction gaz-liquide dans le four rotatif dans lequel a lieu l'évacuation du fer métallique liquide et du laitier dans l'étape (l),
le réglage et l'ajustement de la température du fer liquide par combustion contrôlée d'un combustible et d'un oxydant dans la zone de réaction gaz-liquide,
le siphonnage du fer métallique du four rotatif dans un réceptacle d'extraction sous vide dans lequel sont réalisés simultanément et de façon continue les étapes (a) à (l) incluses et le siphonnage, et
l'évacuation de la plus grande partie du laitier de la zone de réaction gaz-liquide séparément du métal.

21. Procédé selon la revendication 1, 2, 3, 4, 5, 6, 7, 8, 9 ou 10, comprenant aussi des étapes de disposition d'une zone de réaction gaz-liquide dans le four rotatif dans lequel s'effectue l'évacuation du fer métallique liquide et du laitier dans l'étape (l),
le chauffage de la zone de réaction gaz-liquide directement par un brûleur proche de l'extrémité d'évacuation du four rotatif avec réglage de cette manière de la température de l'acier et du fer liquide évacué, et
le chauffage de la zone de réaction gaz-solide-liquide directement par un brûleur d'extrémité de la charge en combinaison avec la chaleur des produits de combustion du brûleur d'extrémité de décharge, circulant dans la zone de réaction gaz-solide-liquide à contre-courant du mouvement général de la charge dans le four rotatif.

22. Procédé selon la revendication 1, 2, 3, 4, 5, 6, 7, 8, 9 ou 10, dans lequel l'étape (a) donne aussi du carbure de fer comme composé chimique solide qui est aussi transféré au four rotatif avec le fer métallique dans l'étape (d), et dans lequel le mélange gazeux enrichi provenant de l'étape (h) est chauffé uniquement à une température comprise entre environ 500 et 850 °C dans les étapes (i) et (j).

23. Procédé selon la revendication 1, 2, 3, 4, 5, 6, 7, 8, 9 ou 10, comprenant aussi l'étape d'injection d'un hydrocarbure supplémentaire dans le réacteur avant le transfert dans l'étape (d) pour la réaction avec le fer afin qu'il se forme du carbure de fer comme composé chimique solide, avec remplacement d'une partie du fer métallique comme matériau donné dans l'étape (a) et transféré au four rotatif dans l'étape (d).
